# EUROPEAN PATENT SPECIFICATION

(11) **EP 3 778 833 B1**
(45) Date of publication and mention of the grant of the patent: **22.11.2023**
(21) Application number: 19777298.1
(22) Date of filing: 29.03.2019
(51) Int. Cl.: C10M 169/04, C10M 111/02, C10N 20/04, C10N 30/00, C10N 30/08, C10N 40/32, F16C 33/66, C10N 30/02, C10N 30/04, C10N 40/00

(54) **LUBRICANT COMPOSITION**
SCHMIERMITTELZUSAMMENSETZUNG
COMPOSITION LUBRIFIANTE

(30) Priority: 30.03.2018 JP 2018070282
(43) Date of publication of application: 17.02.2021
(73) Proprietor: Idemitsu Kosan Co.,Ltd., Chiyoda-ku Tokyo 100-8321 (JP)
(72) Inventor: ONO, Takuya, Ichihara-shi, Chiba 299-0107 (JP); YOKOYAMA, Sho, Ichihara-shi, Chiba 299-0107 (JP); SHIMO, Atsunori, Hiroshima-shi, Hiroshima 732-0053 (JP)
(74) Representative: Hoffmann Eitle
(86) International application number: PCT/JP2019/014202
(87) International publication number: WO 2019/189834

(56) References cited:
- WO-A1-98/02510
- JP-A- H1 081 890
- JP-A- 2000 053 595
- JP-A- 2000 514 853
- JP-A- 2004 528 477
- JP-A- 2016 180 052
- US-A- 5 560 849
- US-A- 5 783 528
- Anonymous: "Registration Dossier - ECHA", , 9 August 2021 (2021-08-09), XP055830937, Retrieved from the Internet: URL:https://echa.europa.eu/registration-do ssier/-/registered-dossier/12026/11/?docum entUUID=0e064dde-7a24-483b-8a91-1eb15b2d7a e2# [retrieved on 2021-08-09]
- Anonymous: "VANLUBE SS", Vanderbilt Chemicals(Specification) , 16 April 2012 (2012-04-16), XP055737477, Retrieved from the Internet: URL:http://neochemical.kz/File/Vanlube_SS. pdf [retrieved on 2019-04-15]

## Description

### Technical Field

The present invention relates to a lubricating oil composition.

### Background Art

A tenter machine to be used for production of optical films and food packaging films has a large number of slide members such as chains, gears and bearings existing inside it.

In production of optical films and food packaging films, these slide members experience high temperatures of 200°C or so. Consequently, the lubricating oil fed thereto also experiences high temperatures and a large evaporation loss, and therefore for maintaining lubricity, the amount of evaporation thereof needs to be suppressed.

On the other hand, it may be considered to increase the supply amount of a lubricating oil to maintain lubricity, which, however, is risky in that the lubricating oil may scatter to adhere to the films being produced. In particular, in production of food packaging films, adhesion of a lubricating oil to scatter is problematic in point of safety, and the amount of the lubricating oil to be supplied needs to be limited.

For suppressing evaporation loss, it may be considered to use a high-viscosity lubricating oil.

However, a high-viscosity lubricating oil is problematic in fluidity thereof, and especially in use at high temperatures for a long period of time, fluidity lowers to cause partial solidification to form solidified sludge and, if so, lubricating oil supply may be stopped to cause poor lubrication in slide members.

Consequently, a lubricating oil for use in a tenter machine is required to satisfy the characteristics that the evaporation loss is small and the amount of evaporation amount is suppressed and that the oil can maintain good fluidity and hardly precipitates solidified sludge. Various developments relating to a lubricating oil that satisfies such requirements are being made.

For example, PTL 1 discloses, as a lubricating oil composition for high-temperature application to be used in tenter machines, etc., a lubricating oil composition that contains a base oil component containing a polyol ester-based synthetic oil, and a diphenylamine derivative having an arylalkyl group and having a specific number-average molecular weight.
US5783528A discloses a lubricant composition by combining ester lubricants with alkylate polyaromatic lubricants. This combination provides a lubricant that exhibits the oxidation/vanish control of alkylate naphthenics, while at the same time providing the high temperature stability of the ester-type lubricants. Preferably, the alkylated aromatic lubricant has a viscosity greater than 25 up to 220 cST measured at 40 °C.
WO98/02510A1 discloses a lubricant comprising an alkyl-substituted naphthalene and an ester for use in drive chains, particle board presses, tenter frames and stenter frames.

### Citation List

### Patent Literature

PTL 1: JP 2005-314650 A

### Summary of Invention

### Technical Problem

PTL 1 says that the lubricating oil composition described therein hardly solidifies to form sludge in a high-temperature open-system real machine environments, and has a low evaporation loss, but further improvement of these characteristics is desired.

The lubricating oil composition described in PTL 1 contains a polyol ester as a base oil, but the polyol ester has a large evaporation loss and is problematic in maintaining lubricity.

In the lubricating oil composition described in PTL 1, for compensating the evaporation loss by the polyol ester, a diphenylamine derivative is blended in a ratio of 2% by mass or more. However, such a relatively large amount of a diphenylamine derivative may solidify in long-term use at high temperatures and may cause reduction in fluidity, therefore resulting in poor lubrication in slide members.

An object of the present invention is to provide a lubricating oil composition which, though having a small evaporation loss and a suppressed amount of evaporation in long-term use in high-temperature environments, can still maintain good fluidity and hardly causes adherence of residue, and to provide a tenter device using the lubricating oil composition.

### Solution to Problem

The present inventors have found that a lubricating oil composition containing a base oil that contains an alkylnaphthalene and an ester compound combined in a specific content ratio can solve the above-mentioned problems, and have completed the present invention.

Specifically, the present invention provides the following.

A lubricating oil composition according to claim 1 containing a base oil (A) containing an alkylnaphthalene (A1) and an ester compound (A2), wherein:
the content ratio of the component (A1) to the component (A2) [(A1)/(A2)] is 15/85 to 85/15 as a ratio by mass.

In the lubricating oil composition the alkylnaphthalene (A1) may have at least one alkyl group having 10 or more carbon atoms.

In the lubricating oil composition the alkylnaphthalene (A1) may contain an alkylnaphthalene (A11) having two or more alkyl groups having 10 or more carbon atoms.

In the lubricating oil composition the number-average molecular weight of the alkylnaphthalene (A1) may be 200 to 2000.

In the lubricating oil composition the ester compound (A2) contains a polyol ester (A21) which is contained in an amount of 60 to 100% by mass based on the total amount of the component (A2).

In the lubricating oil composition the polyol ester (A21) is an ester of a dipentaerythritol and a saturated aliphatic monocarboxylic acid having 5 to 12 carbon atoms.

In the lubricating oil composition the number-average molecular weight of the ester compound (A2) may be 700 to 1500.

In the lubricating oil composition the total content of the component (A1) and the component (A2) in the component (A) may be, based on the total amount of the component (A), 60 to 100% by mass.

The lubricating oil composition contains an antioxidant (B).

In the lubricating oil composition the antioxidant (B) contains an alkylated diphenylamine.

The lubricating oil composition can be used for lubrication of chains equipped in a tenter device.

A tenter device using the lubricating oil composition as defined above, for lubrication of chains.

### Advantageous Effects of Invention

The lubricating oil composition of the present invention is characterized in that, though having a small evaporation loss and a suppressed amount of evaporation even in long-term use in high-temperature environments, it can still maintain good fluidity and hardly causes adherence of residue.

Accordingly, a tenter device using the lubricating oil composition can maintain excellent lubricity and can effectively suppress generation of poor lubrication even in long-term use in high-temperature environments.

### Description of Embodiments

### [Lubricating Oil Composition]

The lubricating oil composition of the present invention contains a base oil (A) that contains an alkylnaphthalene (A1) and an ester compound (A2), andfurther contains the additional additives specified in claim 1 for lubrication.

From the viewpoint of reducing evaporation loss and bettering fluidity and further suppressing sludge precipitation even in long-term use in high-temperature environments, the lubricating oil composition of one embodiment of the present invention further contains an antioxidant (B).

Also from the viewpoint of expressing good lubricity even in a form of a thin film, preferably, the lubricating oil composition of one embodiment of the present invention further contains an extreme-pressure agent (C).

In the lubricating oil composition of one embodiment of the present invention, the total content of the component (A), the component (B) and the component (C) is, based on the total amount (100% by mass) of the lubricating oil composition, preferably 70 to 100% by mass, more preferably 80 to 100% by mass, even more preferably 90 to 100% by mass, further more preferably 95 to 100% by mass.

The components contained in the lubricating oil composition of the present invention are described below.

### <Base Oil (A)>

The lubricating oil composition of the present invention contains a base oil (A) containing an alkylnaphthalene (A1) and an ester compound (A2).

The alkylnaphthalene (A1) contributes toward reducing the evaporation loss of the resultant lubricating oil composition. Namely, containing the alkylnaphthalene (A1), the lubricating oil composition can suppress the amount of evaporation even in long-term use in high-temperature environments.

However, the alkylnaphthalene (A1) may lower fluidity and may solidify in long-term use in high-temperature environments, which may often cause poor lubrication in slide members.

In order to provide a lubricating oil composition that can suppress the reduction in fluidity of the alkylnaphthalene (A1) and can maintain excellent fluidity even in long-term use in high-temperature environments, the ester compound (A2) is used concurrently in the present invention.

Namely, using an alkylnaphthalene (A1) and an ester compound (A2) as combined, the present invention provides a lubricating oil composition that takes advantage of both the two.

Further, in the lubricating oil composition of the present invention, the content ratio of the component (A1) to the component (A2) [(A1)/(A2)] is controlled to be 15/85 to 85/15 as a ratio by mass.

A lubricating oil composition in which the content ratio [(A1)/(A2)] is less than 15/85 has a large evaporation loss and an increased amount of evaporation in high-temperature environments, and therefore has a problem of lubricity reduction.

Regarding a lubricating oil composition in which the content ratio [(A1)/(A2)] is more than 85/15, the fluidity thereof lowers in long-term use in high-temperature environments, therefore readily causing adherence of residue.

From the above-mentioned viewpoints, in the lubricating oil composition of one embodiment of the present invention, the content ratio of the component (A1) to the component (A2) [(A1)/(A2)] is, as a ratio by mass, preferably 20/80 to 80/20, more preferably 25/75 to 75/25, even more preferably 30/70 to 70/30.

In the lubricating oil composition of one embodiment of the present invention, the component (A) may contain any other base oil than the component (A1) and the component (A2). However, the total content of the component (A1) and the component (A2) in the component (A) is, based on the total amount (100% by mass) of the base oil (A) contained in the lubricating oil composition, preferably 60 to 100% by mass, more preferably 70 to 100% by mass, even more preferably 80 to 100% by mass, further more preferably 90 to 100% by mass, especially more preferably 95 to 100% by mass.

In the lubricating oil composition of one embodiment of the present invention, the content of the base oil (A) is, based on the total amount (100% by mass) of the lubricating oil composition, preferably 60 to 100% by mass, more preferably 70 to 99.99% by mass, even more preferably 80 to 99.90% by mass, further more preferably 85 to 99.50% by mass.

### [Alkylnaphthalene (A1)]

The alkylnaphthalene (A1) may be any compound such that at least one hydrogen atom of the naphthalene ring thereof is substituted with an alkyl group.

The number of the alkyl group that the alkylnaphthalene (A1) has may be 1, or may be 2 or more, and is preferably 2 to 6.

One alone or two or more kinds of alkylnaphthalenes (A1) may be used either singly or as combined.

The number of carbon atoms per one alkyl group that the alkylnaphthalene (A1) has is preferably 1 to 36, more preferably 4 to 30 even more preferably 8 to 26, further more preferably 10 to 24.

The alkyl group may be a linear alkyl group or a branched alkyl group.

In the case where the alkylnaphthalene (A1) has plural alkyl groups, the plural alkyl groups may be the same as or different from each other. For example, the plural alkyl groups may differ in the carbon number thereof.

From the viewpoint that the lubricating oil composition of one embodiment of the present invention can be a lubricating oil composition having a reduced evaporation loss, preferably, the alkylnaphthalene (A1) has at least one alkyl group having 10 or more (preferably 12 or more) carbon atoms.

From the above-mentioned viewpoints, more preferably, the alkylnaphthalene (A1) contains an alkylnaphthalene (A11) having 2 or more alkyl groups having 10 or more (preferably 12 or more) carbon atoms.

In one embodiment of the present invention, the content of the component (A11) in the component (A1) is, based on the total amount (100% by mass) of the component (A1), preferably 60 to 100% by mass, more preferably 70 to 100% by mass, even more preferably 80 to 100% by mass, further more preferably 90 to 100% by mass.

The number-average molecular weight of the alkylnaphthalene (A1) is, from the above-mentioned viewpoints, preferably 200 to 2000, more preferably 220 to 1500, even more preferably 250 to 1200, further more preferably 280 to 1000.

In this description, the number-average molecular weight (Mn) is a standard polystyrene-equivalent value measured through gel permeation chromatography (GPC).

The kinematic viscosity at 40°C of the alkylnaphthalene (A1) is preferably 150 to 200 mm²/s, more preferably 160 to 190 mm²/s, even more preferably 170 to 185 mm²/s.

The viscosity index of the alkylnaphthalene (A1) is preferably 90 or more, more preferably 100 or more, even more preferably 110 or more.

In this description, the kinematic viscosity and the viscosity index are values measured and calculated according to JI K2283:2000.

### [Ester Compound (A2)]

Examples of the ester compound (A2) include polyol esters, dibasic acid esters (e.g., ditridecyl glutarate), and aromatic esters (e.g., 2-ethylhexyl trimellitate, 2-ethylhexyl pyromellitate).

One alone or two or more kinds of these ester compounds (A2) may be used either singly or as combined.

From the viewpoint that the lubricating oil composition of the present invention can maintain excellent fluidity even in long-term use in high-temperature environments, the ester compound (A2) contains a polyol ester (A21).

In the present invention, the content of the component (A21) in the component (A2) is, based on the total amount (100% by mass) of the component (A2), 60 to 100% by mass, preferably 70 to 100% by mass, even more preferably 80 to 100% by mass, further more preferably 90 to 100% by mass.

The polyol ester (A21) is generally a complete ester such that all the hydroxy groups in the polyol are esterified, but within a range not having any influence on the advantageous effects of the present invention, it may contain a partial ester in which a part of the hydroxy groups remain as such without being esterified.

The polyolester (A21) is an ester of dipentaerythritol.

The aliphatic monocarboxylic acid includes a saturated aliphatic monocarboxylic acid having 5 to 12 carbon atoms.

The acyl group in the saturated aliphatic monocarboxylic acid may be linear or branched.

Examples of the saturated aliphatic monocarboxylic acid include linear saturated monocarboxylic acids such as valeric acid, caproic acid, enanthic acid, caprylic acid, pelargonic acid, capric acid, undecanoic acid, lauric acid, tridecanoic acid, myristic acid, pentadecanoic acid, palmitic acid, heptadecanoic acid, stearic acid, nonadecanoic acid, arachic acid, and behenic acid; and branched saturated monocarboxylic acids such as isomyristic acid, isopalmitic acid, isostearic acid, 2,2-dimethylpropanoic acid, 2,2-dimethylbutanoic acid, 2,2-dimethylpentanoic acid, 2,2-dimethyloctanoic acid, 2-ethyl-2,3,3-trimethylbutanoic acid, 2,2,3,4-tetramethylpentanoic acid, 2,5,5-trimethyl-2-t-butylhexanoic acid, 2,3,3-trimethyl-2-ethylbutanoic acid, 2,3-dimethyl-2-isopropylbutanoic acid, 2-ethylhexanoic acid, and 3,5,5-trimethylhexanoic acid.

One alone or two or more kinds of these aliphatic monocarboxylic acids may be used either singly or as combined in esterification.

The carbon number of the saturated aliphatic monocarboxylic acid is 5 to 12.

From the viewpoint of providing a lubricating oil composition capable of maintaining excellent fluidity even in long-term use in high-temperature environments, the polyol ester (A21) is an ester of a dipentaerythritol and a saturated aliphatic monocarboxylic acid having 5 to 12 carbon atoms.

The content of the ester in the component (A2) is, based on the total amount (100% by mass) of the component (A2), 60 to 100% by mass, preferably 70 to 100% by mass, more preferably 80 to 100% by mass, even more preferably 90 to 100% by mass.

Further from the above-mentioned viewpoint, in one embodiment of the present invention, preferably, an ester of a dipentaerythritol and a saturated aliphatic monocarboxylic acid having 9 to 12 carbon atoms is contained in an amount of 50% by mass or more (preferably 60% by mass or more, more preferably 70% by mass or more), based on the total amount (100% by mass) of the component (A2).

The number-average molecular weight of the ester compound (A2) is preferably 700 to 1500, more preferably 800 to 1300, even more preferably 900 to 1200.

The kinematic viscosity at 40°C of the ester compound (A2) is preferably 150 to 450 mm²/s, more preferably 175 to 400 mm²/s, even more preferably 200 to 360 mm²/s.

The viscosity index of the ester compound (A2) is preferably 85 or more, more preferably 90 or more, even more preferably 92 or more.

### [Base Oil except component (A1) and component (A2)]

The lubricating oil composition of one embodiment of the present invention may contain, as the base oil (A1), any other base oil not corresponding to the component (A1) and the component (A2), within a range not detracting from the advantageous effects of the present invention.

The other base oil may be a mineral oil or any other synthetic oil than the components (A1) and (A2).

Examples of the base oil include atmospheric residues obtained through atmospheric distillation of crude oils such as paraffin-based crude oils, intermediate-based crude oils and naphthene-based crude oils; distillates obtained through reduced-pressure distillation of such atmospheric residues; and mineral oils obtained by purifying the distillates through one or more purification treatments of solvent deasphalting, solvent extraction, hydrocracking, solvent dewaxing, catalytic dewaxing, or hydrorefining.

Examples of the other synthetic oil include poly-α-olefins such as α-olefin homopolymers, and α-olefin copolymers (e.g., C₈₋₁₄ α-olefin copolymers such as ethylene-α-olefin copolymers); isoparaffins; various ethers such as polyalkylene glycols, and polyphenyl ethers; alkylbenzenes; and synthetic oils obtained through isomerization of a wax produced from a natural gas through Fischer-Tropsch synthesis (GTL wax (Gas To Liquids WAX)).

### <Antioxidant (B)>

From the viewpoint of reducing evaporation loss, bettering fluidity and suppressing sludge precipitation even in long-term use in high-temperature environments, the lubricating oil composition of the present invention further contains an antioxidant (B).

Examples of the antioxidant (B) include amine-based antioxidants, phenol-based antioxidants, molybdenum-based antioxidants, sulfur-based antioxidants, and phosphorus-based antioxidants.

Among these, the antioxidant (B) is preferably one or more selected from amine-based antioxidants and phenol-based antioxidants.

One alone or two or more kinds of antioxidants (B) may be used either singly or as combined.

The amine-based antioxidant may be any anime compound having antioxidation performance, and includes naphthylamines and alkylated diphenylamines.

Examples of the naphthylamines include phenyl-a-naphthylamine, phenyl-ß-naphthylamine, alkylphenyl-α-naphthylamine, and alkylphenyl-ß-naphthylamine.

The carbon number of the alkyl group that the alkylphenyl-α-naphthylamine and the alkylphenyl-ß-naphthylamine have is preferably 1 to 30, more preferably 1 to 20, even more preferably 4 to 16, further more preferably 6 to 14.

The alkylated diphenylamine is preferably a compound represented by the following general formula (b-1), more preferably a compound represented by the following general formula (b-2).

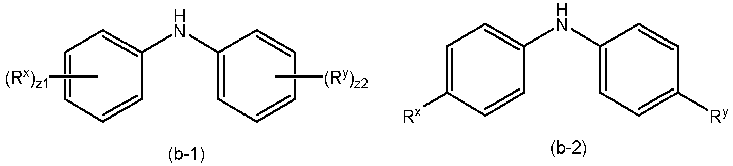

In the general formulae (b-1) and (b-2), R^{x} and R^{y} each independently represent an alkyl group having 1 to 30 carbon atoms, or an alkyl group having 1 to 30 carbon atoms and substituted with an aryl group having 6 to 18 ring atoms.

The alkyl group may be a linear alkyl group or may be a branched alkyl group.

In the general formula (b-1), z1 and z2 each independently represent an integer of 0 to 5, preferably 0 or 1, more preferably 1. In the case where the compound has plural R^{x}'s and R^{y}'s, the plural R^{x}'s and R^{y}'s may be the same as or different from each other.

The carbon number of the alkyl group that can be selected for R^{x} and R^{y} is 1 to 30, but preferably 1 to 20, more preferably 1 to 10.

The aryl group with which the alkyl group can be substituted includes a phenyl group, a naphthyl group and a biphenyl group, and is preferably a phenyl group.

Examples of the alkyl group that the alkylphenyl-naphthylamine has, and the alkyl group that the diphenylamine can has include a methyl group, an ethyl group, a propyl group, a butyl group, a pentyl group, a hexyl group, a heptyl group, an octyl group, a nonyl group, a decyl group, an undecyl group, a dodecyl group, a hexadecyl group, an octadecyl group, a nonadecyl group, an eicosyl group, and a tetracosyl group.

Examples of the phenol-based antioxidant include monocyclic phenol compounds such as 2,6-di-t-butyl-4-methylphenol, 2,6-di-t-butyl-4-ethylphenol, 2,4,6-tri-t-butylphenol, 2,6-di-t-butyl-4-hydroxymethylphenol, 2.6-di-t-butylphenol, 2,4-dimethyl-6-t-butylphenol, 2,6-di-t-butyl-4-(N,N-dimethylaminomethyl)phenol, 2,6-di-t-amyl-4-methylphenol, and n-octadecyl 3-(3,5-di-t-butyl-4-hydroxyphenyl)propionate; and polycyclic phenol compounds such as 4,4'-mehtylenebis(2,6-di-t-butylphenol), 4,4'-isopropylidenebis(2,6-di-t-butylphenol), 2,2'-methylenebis(4-methyl-6-t-butylphenol), 4,4'-bis(2,6-di-t-butylphenol), 4,4'-bis(2-methyl-6-t-butylphenol), 2,2'-methylenebis(4-ethyl-6-t-butylphenol), and 4,4'-butylidenebis(3-methyl-6-t-butylphenol).

From the viewpoint of reducing evaporation loss, bettering fluidity and suppressing sludge precipitation in long-term use in high-temperature environments, the lubricating oil composition of one embodiment of the present invention preferably contains an alkylated diphenylamine as the antioxidant (B).

In the lubricating oil composition of one embodiment of the present invention, the content of the component (B) is, based on the total amount (100% by mass) of the lubricating oil composition, preferably 0.01 to 10% by mass, more preferably 0.05 to 7% by mass, even more preferably 0.1 to 5% by mass, further more preferably 0.15 to 1.9% by mass.

### <Extreme-pressure Agent (C)>

From the viewpoint of expressing good lubricity even when formed into a thin film, preferably, the lubricating oil composition of one embodiment of the present invention further contains an extreme-pressure agent (C).

Examples of the extreme-pressure agent (C) include sulfur-based extreme-pressure agents such as molybdenum dithiocarbamate, molybdenum dithiophosphate, disulfides, olefin sulfides, sulfurized oils and fats, sulfurized esters, thiocarbonates, thiocarbamates, and polysulfides; phosphorus-based extreme-pressure agents such as phosphites, phosphates, phosphonates and amine salts or metal salts thereof and sulfur/phosphorus-based extreme-pressure agents such as thiophosphites, thiophosphates, thiophosphonates, and amine salts or metal salts thereof.

One alone or two or more kinds of these extreme-pressure agents (C) can be used either singly or as combined.

In the lubricating oil composition of one embodiment of the present invention, from the viewpoint of expressing good lubricity even when formed into a thin film, the extreme-pressure agent (C) is preferably a phosphorus-based extreme-pressure agent, and is more preferably one or more selected from neutral phosphates, acid phosphates, and amine salts of acid phosphates.

In the lubricating oil composition of one embodiment of the present invention, the content of the component (C) is, based on the total amount (100% by mass) of the lubricating oil composition, preferably 0.01 to 5.0% by mass, more preferably 0.02 to 2.0% by mass, even more preferably 0.05 to 1.0% by mass, further more preferably 0.10 to 0.80% by mass.

### <Other Lubricating Oil Additives>

The lubricating oil composition of one embodiment of the present invention can contain any other lubricating oil additive than the above-mentioned components (B) and (C) within a range not detracting from the advantageous effects of the present invention.

Examples of such lubricating oil additives include a rust inhibitor, a metal-based detergent, an ash-free dispersant, a viscosity index improver, an anti-foaming agent, a friction modifier, an anti-wear agent, and a metal deactivator.

One alone or two or more kinds of these lubricating oil additives may be used either singly or as combined.

In the case where such a lubricating oil additive is blended, the content of each lubricating oil additive may be appropriately controlled depending on the kind of the additive within a range not detracting from the advantageous effects of the present invention, but is, based on the total amount (100% by mass) of the lubricating oil composition, generally 0.001 to 10% by mass, preferably 0.005 to 5% by mass, more preferably 0.01 to 2% by mass.

### [Physical Properties of Lubricating Oil Composition]

The kinematic viscosity at 40°C of the lubricating oil composition of one embodiment of the present invention is preferably 130 to 220 mm²/s, more preferably 150 to 210 mm²/s, even more preferably 160 to 200 mm²/s.

The viscosity index of the lubricating oil composition of one embodiment of the present invention is preferably 90 or more, more preferably 100 or more, even more preferably 105 or more.

### [Use of Lubricating Oil Composition, Tenter Device]

The lubricating oil composition of the present invention has such characteristics that it has a small evaporation loss, suppresses the amount of evaporation, maintains good fluidity and hardly causes adherence of residue even in long-term use in high-temperature environments.

Consequently, the lubricating oil composition of the present invention is favorably used for lubrication of chains equipped in tenter devices.

Also the present application can provide a tenter device of the following [1].
[1] A tenter device using a lubricating oil composition according to claim 1 for lubrication of chains therein, wherein the lubricating oil composition contains a base oil (A) containing an alkylnaphthalene (A1) and an ester compound (A2) and wherein the content ratio of the component (A1) to the component (A2) [(A1)/(A2)] is 15/85 to 85/15 as a ratio by mass.

The lubricating oil composition for use in the tenter device is the lubricating oil composition of the present invention, and the details thereof are as described above.

The tenter device of the above [1] uses the lubricating oil composition of the present invention, and therefore can maintain excellent lubricity and can effectively suppress generation of poor lubrication even in long-term use in high-temperature environments.

### Examples

Next, the present invention is described more specifically with reference to Examples, but the present invention is not restricted to these Examples. Measurement methods and evaluation methods for physical properties are described below.

### (1) Kinematic viscosity and viscosity index

Measured and calculated according to JIS K2283:2000.

### (2) Number-average molecular weight

Using a gel permeation chromatography apparatus ("1260 Model HPLC" from Agilent Technologies, Inc.), each sample was measured under the conditions mentioned below to be given a standard polystyrene-equivalent value.

### (Measurement conditions)

Columns: "Two columns of Shodex LF404" were connected in series.
Column temperature: 35°C
Developing solvent: chloroform
Flow rate: 0.3 mL/min

### Examples 1 to 7, Comparative Examples 1 to 4

To the mixed base oil prepared by mixing an alkylnaphthalene "AN (1)" and an ester compound "POE(1)" in a content ratio (ratio by mass) as shown in Table 1, an antioxidant and an extreme-pressure agent as shown below were added as additives each in a blending amount as shown in Table 1, and well mixed to prepare a lubricating oil composition.

Details of the components used in preparing the lubricating oil compositions are as follows.

### (Alkylnaphthalene)

"AN (1)": Mixture of alkylnaphthalenes having 1 to 5 alkyl groups having 14 carbon atoms (where alkylnaphthalene having 3 to 4 alkyl groups having 14 carbon atoms are main components), number-average molecular weight = 300 to 1200, kinematic viscosity at 40°C = 177 mm²/s, viscosity index = 118.

### (Ester compound)

"POE (1)": Dipentaerythritol ester of dipentaerythritol and a carboxylic acid mixture of 3,5,5-trimethylhexanoic acid (carbon number 9)/n-heptanoic acid (carbon number 7)/n-pentanoic acid (C5) = 72.6/21.0/6.4 (ratio by mass), number-average molecular weight = 1039, kinematic viscosity at 40°C = 220 mm²/s, viscosity index = 95.

### (Additives)

"Antioxidant": Butylphenyloctylphenylamine.
"Extreme-pressure agent": Amine salt of di(2-ethylhexyl)acid phosphate with laurylamine (C12).

The 40°C kinematic viscosity of each of the thus-prepared lubricating oil compositions was measured, and the compositions were tested as follows. The results are shown in Table 1.

### (1) Measurement of residue ratio

A container and a constant-temperature air bath used in a lubricating oil thermal stability test stipulated in JIS K2540 were used. One g of a sample oil was put into the container, and while air was kept introduced into the constant-temperature air bath at a flow rate of 10 L/hr, the sample oil was heated at 230°C for 20 hours, and after the heating the residue amount in the sample oil was measured. From the following expression, the residue ratio was calculated. Residue ratio [%] = (residue amount [g] of sample oil after heating)/(mass (= 1 g) of sample oil before heating) × 100

When the residue ratio is 70% or more, the amount of evaporation from the sample of the lubricating oil composition was considered to be suppressed, and the sample was rated as good.

### (2) Fluidity of residue

The container containing the residue of the sample oil after heating, which had been used for calculating the residue ratio in the above (1), was inclined by 45 degrees relative to the horizontal direction, and the fluidity of the reside (thin film residue) was evaluated according to the following criteria.
A: No residue adhered, and the residue flowed down from the container within 15 minutes.
B: Residue partly adhered, and partly flowed down from the container within 15 minutes.
C: Residue adhered, and the contents did not flow down from the container even after 15 minutes.

**Table 1**

| | | | | Comparative Example 1 | Comparative Example 2 | Example 1 | Example 2 | Example 3 | Example 4 | Example 5 | Example 6 | Example 7 | Comparative Example 3 | Comparative Example 4 |
|---|---|---|---|---|---|---|---|---|---|---|---|---|---|---|
| Composition | Mixed Base Oil | AN(1)/ POE(1) (ratio by mass) | - | 0/100 | 10/90 | 20/80 | 30/70 | 40/60 | 50/50 | 60/40 | 70/30 | 80/20 | 90/10 | 100/0 |
| | | blending amount | mass% | 99.0 | 99.0 | 99.0 | 99.0 | 99.0 | 99.0 | 99.0 | 99.0 | 99.0 | 99.0 | 99.0 |
| | Antioxidant | blending amount | mass% | 0.5 | 0.5 | 0.5 | 0.5 | 0.5 | 0.5 | 0.5 | 0.5 | 0.5 | 0.5 | 0.5 |
| | Extreme-pressure Agent | blending amount | mass% | 0.5 | 0.5 | 0.5 | 0.5 | 0.5 | 0.5 | 0.5 | 0.5 | 0.5 | 0.5 | 0.5 |
| | Total | | mass% | 100.0 | 100.0 | 100.0 | 100.0 | 100.0 | 100.0 | 100.0 | 100.0 | 100.0 | 100.0 | 100.0 |
| Properties | 40°C Kinematic Viscosity of Lubricating Oil Composition | | mm²/s | 199.2 | 195.4 | 191.1 | 187.1 | 183.1 | 179.2 | 175.4 | 171.7 | 168.1 | 164.6 | 161.2 |
| Evaluation | Residue Ratio | | % | 12.5 | 64.8 | 82.5 | 78.5 | 78.8 | 77.2 | 80.3 | 76.0 | 77.7 | 76.1 | 73.5 |
| | Fluidity or Residue | | - | A | A | A | A | A | A | A | A | A | C | C |

The results in Table 1 are that the lubricating oil compositions prepared in Examples 1 to 7 have a high residue ratio, that is, the amount of evaporation in these was suppressed and the fluidity of the residue was good. Consequently, it can be said that the lubricating oil compositions can maintain excellent fluidity for a long period of time and can form a thin film.

On the other hand, the lubricating oil compositions prepared in Comparative Examples 1 and 2 had a low residue ratio and the evaporation loss thereof was large. The lubricating oil compositions prepared in Comparative Examples 3 and 4 had a high residue ratio, but were poor in the fluidity of residue, and accordingly, it is considered that these could hardly form a thin film in use for a long period of time.

## Claims

1. A lubricating oil composition comprising a base oil (A) containing an alkylnaphthalene (A1) and an ester compound (A2), wherein:
the content ratio of the component (A1) to the component (A2) [(A1)/(A2)] is 15/85 to 85/15 as a ratio by mass;
the ester compound (A2) contains a polyol ester (A21), which is contained in an amount of 60 to 100% by mass based on the total amount of the component (A2);
the polyol ester (A21) is an ester of a dipentaerythritol and a saturated aliphatic monocarboxylic acid having 5 to 12 carbon atoms;
the lubricating oil composition further comprises an antioxidant (B); and
wherein the antioxidant (B) contains an alkylated diphenylamine.

2. The lubricating oil composition according to claim 1, wherein the alkylnaphthalene (A1) has at least one alkyl group having 10 or more carbon atoms.

3. The lubricating oil composition according to claim 1 or 2, wherein the alkylnaphthalene (A1) contains an alkylnaphthalene (A11) having two or more alkyl groups having 10 or more carbon atoms.

4. The lubricating oil composition according to any one of claims 1 to 3, wherein the number-average molecular weight of the alkylnaphthalene (A1) is 200 to 2000.

5. The lubricating oil composition according to any one of claims 1 to 4, wherein the number-average molecular weight of the ester compound (A2) is 700 to 1500.

6. The lubricating oil composition according to any one of claims 1 to 5, wherein the total content of the component (A1) and the component (A2) in the component (A) is, based on the total amount of the component (A), 60 to 100% by mass.

7. Use of a lubricating oil composition according to any one of claims 1 to 6 for lubrication of chains equipped in a tenter device.

## Patentansprüche

1. Schmierölzusammensetzung, umfassend ein Basisöl (A) enthaltend ein Alkylnaphthalin (A1) und eine Esterverbindung (A2), wobei:
das Gehaltsverhältnis der Komponente (A1) zu der Komponente (A2) [(A1)/(A2]] 15/85 bis 85/15 als Massenverhältnis beträgt;
die Esterverbindung (A2) einen Polyolester (A21) enthält, der in einer Menge von 60 bis 100 Massen-% enthalten ist, bezogen auf die Gesamtmenge der Komponente (A2);
der Polyolester (A21) ein Ester aus einem Dipentaerythrit und einer gesättigten aliphatischen Monocarbonsäure mit 5 bis 12 Kohlenstoffatomen ist;
die Schmierölzusammensetzung ferner ein Antioxidationsmittel (B) umfasst; und
wobei das Antioxidationsmittel (B) ein alkyliertes Diphenylamin enthält.

2. Schmierölzusammensetzung gemäß Anspruch 1, wobei das Alkylnaphthalin (A1) mindestens eine Alkylgruppe mit 10 oder mehr Kohlenstoffatomen aufweist.

3. Schmierölzusammensetzung gemäß Anspruch 1 oder 2, wobei das Alkylnaphthalin (A1) ein Alkylnaphthalin (A11) mit zwei oder mehr Alkylgruppen mit 10 oder mehr Kohlenstoffatomen enthält.

4. Schmierölzusammensetzung gemäß mindestens einem der Ansprüche 1 bis 3, wobei das zahlenmittlere Molekulargewicht des Alkylnaphthalins (A1) 200 bis 2000 beträgt.

5. Schmierölzusammensetzung gemäß mindestens einem der Ansprüche 1 bis 4, wobei das zahlenmittlere Molekulargewicht der Esterverbindung (A2) 700 bis 1500 beträgt.

6. Schmierölzusammensetzung gemäß mindestens einem der Ansprüche 1 bis 5, wobei der Gesamtgehalt der Komponente (A1) und der Komponente (A2) in der Komponente (A), bezogen auf die Gesamtmenge der Komponente (A), 60 bis 100 Massen-% beträgt.

7. Verwendung einer Schmierölzusammensetzung gemäß mindestens einem der Ansprüche 1 bis 6 zur Schmierung von Ketten in einer Spannvorrichtung.

## Revendications

1. Composition d'huile lubrifiante comprenant une huile de base (A) contenant un alkylnaphtalène (A1) et un composé ester (A2), dans laquelle :
le rapport de teneur du composant (A1) sur le composant (A2) [(A1)/(A2)] est de 15/85 à 85/15 en tant que rapport en masse ;
le composé ester (A2) contient un ester de polyol (A21), qui est contenu en une quantité de 60 à 100 % en masse sur la base de la quantité totale du composant (A2) ;
l'ester de polyol (A21) est un ester d'un dipentaérythritol et d'un acide monocarboxylique aliphatique saturé ayant de 5 à 12 atomes de carbone ;
la composition d'huile lubrifiante comprend en outre un antioxydant (B) ; et dans laquelle l'antioxydant (B) contient une diphénylamine alkylée.

2. Composition d'huile lubrifiante selon la revendication 1, dans laquelle l'alkylnaphtalène (A1) a au moins un groupe alkyle ayant 10 atomes de carbone ou plus.

3. Composition d'huile lubrifiante selon la revendication 1 ou la revendication 2, dans laquelle l'alkylnaphtalène (A1) contient un alkylnaphtalène (A11) ayant deux groupes alkyle ou plus ayant 10 atomes de carbone ou plus.

4. Composition d'huile lubrifiante selon l'une quelconque des revendications 1 à 3, dans laquelle le poids moléculaire moyen en nombre de l'alkylnaphtalène (A1) est de 200 à 2 000.

5. Composition d'huile lubrifiante selon l'une quelconque des revendications 1 à 4, dans laquelle le poids moléculaire moyen en nombre du composé ester (A2) est de 700 à 1 500.

6. Composition d'huile lubrifiante selon l'une quelconque des revendications 1 à 5, dans laquelle la teneur totale en composant (A1) et en composant (A2) dans le composant (A) est, sur la base de la quantité totale du composant (A), de 60 à 100 % en masse.

7. Utilisation d'une composition d'huile lubrifiante selon l'une quelconque des revendications 1 à 6 pour la lubrification de chaînes équipées dans un dispositif étireur.
